# EUROPÄISCHE PATENTSCHRIFT

(11) **EP 3 003 900 B1**
(45) Veröffentlichungstag und Bekanntmachung des Hinweises auf die Patenterteilung: **16.05.2018**
(21) Anmeldenummer: 14736283.4
(22) Anmeldetag: 28.05.2014
(51) Int. Cl.: B65D 77/04, B65D 81/00

(54) **ROLLBARER TRANSPORTBEHÄLTER UND VERFAHREN ZUM TRANSPORTIEREN EINES TRANSPORTGUTS MIT EINEM SOLCHEN TRANSPORTBEHÄLTER**
ROLLABLE TRANSPORT CONTAINER AND METHOD FOR TRANSPORTING GOODS TO BE TRANSPORTED BY MEANS OF A TRANSPORT CONTAINER OF THIS TYPE
CONTENANT DE TRANSPORT ROULANT ET PROCÉDÉ POUR TRANSPORTER DES MARCHANDISES AU MOYEN D'UN TEL CONTENANT DE TRANSPORT

(30) Priorität: 31.05.2013 CH 10402013; 31.05.2013 CH 10412013; 31.05.2013 CH 10422013; 24.03.2014 CH 4462014; 12.05.2014 CH 7092014
(43) Veröffentlichungstag der Anmeldung: 13.04.2016
(73) Patentinhaber: WRH Walter Reist Holding AG, 8272 Ermatingen (CH)
(72) Erfinder: FELIX, Markus, 8805 Richterswil (CH); RUGE, Martin, CH-4656 Starrkirch-Wil (CH)
(74) Vertreter: IPrime Rentsch Kaelin AG
(86) Internationale Anmeldenummer: PCT/EP2014/001445
(87) Internationale Veröffentlichungsnummer: WO 2014/191104

(56) Entgegenhaltungen:
- WO-A2-2004/082420
- GB-A- 2 494 651
- JP-A- 2005 138 896
- JP-A- 2006 016 044
- US-A- 3 352 512

## Beschreibung

### TECHNISCHES GEBIET

Die vorliegende Erfindung bezieht sich auf das Gebiet des Transports und der Lagerung von Transportgütern. Sie betrifft einen rollbaren Transportbehälter gemäss dem Oberbegriff des Anspruchs 1.

Sie betrifft weiter ein Verfahren zum Transportieren eines Transportguts mit einem solchen Transportbehälter.

### STAND DER TECHNIK

Für die Verpackung und den Transport von Waren sind unterschiedliche Transportbehälter bekannt, beispielsweise Schachteln, Kisten, Paletten, etc. Bekannte Transportbehälter können auf Transportwagen, Transportbänder, etc. transportiert werden, um den Transport von Gütern von einem Ausgangsort zu einem Zielort zu ermöglichen. Oft werden in einer Logistikzentrale, Lagerzentrale, etc. kleinere Einheiten zu grösseren Einheiten zusammengefasst, welche dann über grössere Strecken mit dem Lastwagen, Zug, Flugzeug, etc. transportiert werden und danach wieder in kleinere Einheiten aufgetrennt werden, um diese in einer lokalen Umgebung an verschiedene Zielorte zu transportieren. Dadurch kann der Energieaufwand für den Transport der Waren optimiert werden.

Die Transportbehälter sind jeweils an eine bestimmte Anwendung angepasst. Für den Postversand leichter und robuster Waren kommen oft Kartonschachteln zum Einsatz, sehr schwere oder sehr sensible Waren werden in Holzkisten transportiert, etc.

Die JP 2006016044 zeigt einen rollbaren Transportbehälter, welcher auf einer schrägen Unterlage ohne die Zuführung von Energie von einem Ausgangsort zu einem Zielort rollen kann. Zwei Halbkugeln, die ein äusseres Behälterteil bilden, sind an einem Scharnier aufklappbar verbunden und können mit einem Verschluss verschlossen werden. Zwei kleinere Halbkugeln, die ein inneres Behälterteil bilden, sind ebenfalls an einem Scharnier aufklappbar verbunden und können mit einem weiteren Verschluss verschlossen werden. Das innere Behälterteil lässt sich in das äussere Behälterteil einsetzen und weist eine Vielzahl stiftartige Kopplungselemente auf, die über die gesamte Aussenfläche des inneren Behälterteils verteilt sind. Die stiftartigen Kopplungselemente weisen kugelförmige Enden auf, die den inneren Behälterteil im äusseren Behälterteil derart abstützen, dass sich der innere Behälterteil im äusseren Behälterteil frei verdrehen kann. Im zweiten Behälterteil ist ein Transportgut zentral gehalten. Beim Abrollen des äusseren Behälterteils auf einer Unterlage bleibt der innere Behälterteil gegenüber der Unterlage gleich ausgerichtet, insbesondere aufgrund eines im inneren Behälterteil nahe zur Unterlage angeordneten Gewichtselements.

Aus der Druckschrift CN 201942318 U ist ein intelligentes System zur Echtzeit-Bearbeitung von Bestellungen mit automatischer Zustellung von Waren an die Kunden bekannt, welches mit kugelförmigen Transportbehältern arbeitet, die jeweils eine kugelförmige Hülle und einen darin angeordneten Einsatz umfassen, der an einen in der Kugel befindlichen viereckigen, zylindrischen oder runden Behälter angepasst ist, der schliesslich die eigentlichen Waren aufnimmt. Dieses System ist ausgelegt für lange Transportwege zwischen dem Warenverkäufer und dem die Waren empfangenden Kunden über in Stadt und Land meist unterirdisch verlegte Transportröhren und -wegen.

Das Dokument JP 2005 138896 zeigt einen Verpackungsbehälter welcher das verpackte Gut in einer horizontalen Lage hält. Ein kugelförmiger Aussenbehälter ist auf der Aussenhülle abrollbar. Ein Innenbehälter ist auf Rollen auf einem unteren Bereich des Aussenbehälters abgestützt.

Das Dokument US 3,352,512 zeigt ein Transportsystem, bei welchem ein Gefährt in einer Röhre oder einem Tunnel geführt ist. Der Vortrieb erfolgt durch Luftdruck oder -sog. Das System kann für den Transport von Passagieren dienen. Die Passagiere werden in einer aufrechten Haltung in dem Gefährt, das wie ein Projektil ist, bei wesentlich höheren Geschwindigkeiten durch die Röhren geführt. Das Gefährt ist kugelförmig und schwimmt in erster Linie auf komprimierter Luft. Das Gefährt weist eine Inneninstallation auf, welche für die aufrechte Lage der Passagiere sorgt, unabhängig von Rollbewegungen, Seitwärtsbewegungen, Winkelbewegungen oder Drehbewegungen des Gefährts. Die Inneninstallation umfasst ein zweites halbkugelförmiges Element, welches gegenüber dem kugelförmigen Gefährt bewegbar gelagert ist. Zur Lagerung sind in einem unteren und mittleren Bereich Lagerkugeln vorgesehen. In einem unteren Bereich des halbkugelförmigen Elements können Gewichte angeordnet sein, um eine aufrechte Lage zu gewährleisten.

Nachteilig bei den bekannten Transportbehälter ist, dass für den Transport von einem Ausgangsort zu einem Zielort die Zuführung von Energie erforderlich ist oder dass ein rollbarer Transportbehälter einen sehr komplizierten Aufbau aufweist, der für den Versand grosser Warenmengen nicht geeignet ist. Insbesondere für eine effiziente und ökonomische Lagerbewirtschaftung sind aus dem Stand der Technik keine geeigneten Transportbehälter bekannt.

### DARSTELLUNG DER ERFINDUNG

Es ist daher eine Aufgabe der Erfindung, einen rollbaren Transportbehälter zu schaffen, welcher die gewünschten Eigenschaften aufweist, sowie ein Verfahren zum Transportieren eines Transportguts mit einem solchen Transportbehälter anzugeben.
Die Aufgabe wird durch die Merkmale der unabhängigen Ansprüche gelöst.
Der erfindungsgemässe rollbare Transportbehälter umfasst eine Aussenhülle, die auf einer Unterlage abrollbar ist, und eine Innenhalterung, die zur Halterung eines Transportguts ausgebildet ist, wobei Lagermittel ausgebildet sind, um die Innenhalterung drehbar in der Aussenhülle zu lagern. Der erfindungsgemässe rollbare Transportbehälter ist dadurch gekennzeichnet, dass die Lagermittel nur in einem mittleren Bereich des rollbaren Transportkörpers ausgebildet sind. Die Konstruktion des rollbaren Transportbehälters kann stark vereinfacht werden, wobei das Transportgut beim Rollen des rollbaren Transportbehälters auf einer Unterlage, insbesondere bei einer entsprechenden Gewichtsverteilung, stets im Wesentlichen gegenüber der Unterlage gleich ausgerichtet bleibt. Beim Abrollen des Transportbehälters dreht das Transportgut nicht mit dem Transportbehälter mit, sondern bleibt stets im Wesentlich gleich ausgerichtet gegenüber der Richtung der Schwerkraft. Damit kann das Transportgut schonend transportiert werden. Auf einer geneigten Unterlage kann der rollbare Transportbehälter ohne Zuführung von Energie von einem höher gelegenen Ausgangsort zu einem niedriger gelegenen Zielort gerollt werden.

Eine Ausgestaltung des Transportbehälters ist dadurch gekennzeichnet, dass die Lagermittel an der Aussenhülle verschiebbar und/oder drehbar abgestützt sind. Durch die Verschiebung und/oder Drehung kann insbesondere beim Abrollen der rollbaren Transporthalterung auf einer kurvenförmigen Unterlage eine gewünschte Ausrichtung des Transportguts gegenüber der Unterlage erreicht werden.

Eine andere Ausgestaltung des Transportbehälters ist dadurch gekennzeichnet, dass die Lagermittel eines oder mehrere stabförmige Profile umfassen, an welchen die Innenhalterung angeordnet ist. Stabförmige Profile ermöglichen es, ein kostengünstiges und stabiles Lagermittel herzustellen.

Eine andere Ausgestaltung des Transportbehälters ist dadurch gekennzeichnet, dass die Lagermittel zur Abstützung an der Aussenhülle mehrere Abstützeinrichtungen umfassen. Es können zwei oder mehr Abstützeinrichtungen vorgesehen sein. Die Abstützeinrichtungen können kalottenförmig ausgebildet sein. Die Kalottenform ist insbesondere an eine kugelförmige und/oder zylinderförmige Aussenhülle angepasst. Die Abstützeinrichtungen können eine andere, an die Aussenhülle angepasste Form aufweisen.

Eine andere Ausgestaltung des Transportbehälters ist dadurch gekennzeichnet, dass die Lagermittel eine ringförmige Stützeinrichtung umfasst, deren Aussenseite zur Abstützung an der Aussenhülle ausgebildet ist und an deren Innenseite die Innenhalterung drehbar gelagert ist. Die ringförmige Stützeinrichtung ist an der Aussenseite beispielsweise bombiert und kann sich in der Aussenhülle beispielsweise frei verdrehen, aber bleibt stets in einem mittleren Bereich des rollbaren Transportkörpers angeordnet.

Eine andere Ausgestaltung des Transportbehälters ist dadurch gekennzeichnet, dass die Lagermittel eines oder mehrere Wälzlager umfassen. Die Wälzlager sind beispielsweise als Kugellager ausgebildet. Wälzlager mit einem geringen Reibungswiderstand ermöglichen, dass die Innenhalterung sehr leichtgängig in der Aussenhülle gelagert ist.

Eine andere Ausgestaltung des Transportbehälters ist dadurch gekennzeichnet, dass die Lagermittel an der Aussenhülle feststehend abgestützt sind. Durch die feststehende Anordnung kann insbesondere beim Abrollen der rollbaren Transporthalterung auf einer kurvenförmigen Unterlage eine gewünschte Ausrichtung des Transportguts gegenüber der Unterlage erreicht werden.

Eine andere Ausgestaltung des Transportbehälters ist dadurch gekennzeichnet, dass die Lagermittel die Innenhalterung abrollbar in der Aussenhülle abstützen. Dies kann zusätzlich oder alternativ zu anderen Lagermittel vorgesehen sein. Beispielsweise kann damit das Verhalten beim Rollen des rollbaren Transportbehälters an weitere Anwendungen angepasst werden.

Eine andere Ausgestaltung des Transportbehälters ist dadurch gekennzeichnet, dass die Lagermittel an der Innenhalterung ausgebildet sind, die an der Aussenhülle abrollbar ausgebildet ist. Der rollbare Transportbehälter ist damit besonders einfach und robust ausgeführt.

Um das Abrollen der Innenhalterung an der Aussenhülle zu begünstigen, können geeignete Materialpaarungen der betreffenden Teile, ein Schmiermittel zwischen den betreffenden Teilen, Flüssigkeiten oder Fluide zwischen den betreffenden Teilen vorgesehen sein. Wenn zwischen der Aussenhülle und der Innenhalterung eine Flüssigkeit oder ein Fluid vorhanden ist, dann kann dadurch der Schwerpunkt des Transportbehälters tiefer gehalten werden, insbesondere für den Fall von Flüssigkeiten oder Fluiden mit einer hohen Dichte.

Eine andere Ausgestaltung des Transportbehälters ist dadurch gekennzeichnet, dass die Lagermittel kugelförmige Körper umfassen, welche in pfannenförmige Ausnehmungen der Innenhalterung eingesetzt sind, wobei die kugelförmigen Körper an der Aussenhülle abrollbar abgestützt sind. Dadurch kann eine einfach aufgebaute, langlebige und robuste rollbare Transporthalterung geschaffen werden.

Eine andere Ausgestaltung des Transportbehälters ist dadurch gekennzeichnet, dass die Aussenhülle kugelförmig ausgebildet ist.

Eine andere Ausgestaltung des Transportbehälters ist dadurch gekennzeichnet, dass die Aussenhülle zylinderförmig oder tonnenförmig ausgebildet ist.

Eine andere Ausgestaltung des Transportbehälters ist dadurch gekennzeichnet, dass die Innenhalterung asymmetrisch ausgebildet ist. Die asymmetrische Ausbildung ermöglicht eine gewünschte Gewichtsverteilung der Innenhalterung und der Schwerpunkt der Innenhalterung kann dadurch an eine gewünschte Position gebracht werden.

Eine andere Ausgestaltung des Transportbehälters ist dadurch gekennzeichnet, dass eines oder mehrere Zusatzgewichte vorgesehen sind. Ein Zusatzgewicht kann an oder in der Innenhalterung angebracht sein. Ein Zusatzgewicht kann alternativ oder zusätzlich zwischen der Innenhalterung und der Aussenhülle vorgesehen sein, beispielsweise in der Form von Kugeln. Der Schwerpunkt sowohl der Innenhalterung als auch des Transportbehälters kann dadurch weiter beeinflusst werden.

Eine andere Ausgestaltung des Transportbehälters ist dadurch gekennzeichnet, dass die Innenhalterung ein Haltemittel aufweist, um ein Transportgut in der Innenhalterung zu halten. Dadurch kann ein Verrutschen des Transportguts verhindert werden. Das Verrutschen des Transportguts kann ein ungünstiges Rollverhalten des rollbaren Transportbehälters bewirken.

Eine andere Ausgestaltung des Transportbehälters ist dadurch gekennzeichnet, dass die Aussenhülle und die Innenhalterung eingerichtet sind, um ein Transportgut darin anzuordnen und daraus zu entnehmen. Es können Klappen, Öffnungen, etc. vorgesehen sein.

Eine andere Ausgestaltung des Transportbehälters ist dadurch gekennzeichnet, dass die Aussenhülle und/oder die Innenhalterung aus mehreren Teilen zusammengesetzt sind.

Eine andere Ausgestaltung des Transportbehälters ist dadurch gekennzeichnet, dass die Aussenhülle und/oder die Innenhalterung zwei oder mehr Teile umfasst, welche das Öffnen und Schliessen der Aussenhülle und/oder der Innenhalterung ermöglichen. Es können Scharniere, Schlösser, etc. vorgesehen sein. Die Teile können miteinander verschraubbar oder in einer anderen Weise miteinander verbindbar vorgesehen sein.

Eine andere Ausgestaltung des Transportbehälters ist dadurch gekennzeichnet, dass ein von aussen abfragbares Identifikationsmittel angeordnet ist. Das Identifikationsmittel ist beispielsweise an der Innenhalterung oder an der Aussenhülle angebracht. Das Identifikationsmittel enthält insbesondere Angaben über das Transportgut. Dies ermöglicht eine automatisierte Lagerbewirtschaftung.

Eine andere Ausgestaltung des Transportbehälters ist dadurch gekennzeichnet, dass das von aussen abfragbare Identifikationsmittel ein optisch ablesbarer Code und/oder ein funkbasiert abfragbarer RFID-Tag ist. Der optisch ablesbare Code kann mehrfach angebracht sein, um unabhängig der Position des rollbaren Transportbehälters das Ablesen zu ermöglichen.

Die Transportgüter können irgendwelche Waren betreffen, wie beispielsweise Elektronikartikel, Pharmazeutika, Bücher, DVDs, etc.

Um die Transportgüter jederzeit identifizierbar zu machen, ohne dass rollbare Transportbehälter geöffnet werden muss, kann wie erwähnt aussen oder innen ein "Tag", insbesondere ein RFID-Element oder -Tag angebracht sein, das mit entsprechenden drahtlos arbeitenden Mitteln ausgelesen werden kann. Alternativ oder zusätzlich zum RFID-Element kann ein Strichcode vorgesehen werden. Beide Elemente enthalten Informationen über das Transportgut, die eine eindeutige Identifikation des Transportguts möglich machen. Andere Arten von aufgebrachten Codes wie z.B. Matrixcode, Farbcode, Zahlencode, Thermocode oder Hologramme sind ebenfalls als Informations- und/oder Identifikationsmittel oder Sicherheitsmerkmal denkbar. Alle diese Mittel können optisch, magnetisch oder funktechnisch auslesbar sein, und zwar entweder als passive Mittel, die von aussen abgefragt werden, oder als aktive Mittel, die selbst eine Informationsübertragung durchführen.

Der rollbare Transportbehälter kann darüber hinaus mit einer eigenen Intelligenz ausgestattet sein, z.B. in Form von elektronischen Mitteln zur Daten- oder Signalverarbeitung, z.B. mit einem Mikroprozessor und entsprechenden Datenspeichern. Zugehörige Sende- und Empfangseinrichtungen können dabei über an der Aussenseite angebrachte Antennenelemente mit der Umgebung drahtlos Signale austauschen. Es ist aber auch denkbar, an bestimmten Stellen der Hülle von aussen zugängliche elektrische Kontakte anzuordnen, über die auf interne Schaltungen zugegriffen werden kann.

Im Zusammenhang mit internen elektronischen Einrichtungen in des rollbaren Transportkörpers können interne Energiespeicher und/oder Energiewandler vorgesehen werden, die mechanische Energie (Feder, Gasdruck), thermische Energie (Wärmespeicher) oder elektromagnetische Energie (Kondensator, Batterie, Akkumulator, Spule etc.) speichern oder Energie erzeugen (piezoelektrischer Wandler, induktiver Wandler etc.).

Weiterhin ist es denkbar, innerhalb des rollbaren Transportkörpers Ortungsmittel vorzusehen, mit deren Hilfe sich der Aufenthaltsort der Einheit jederzeit bestimmen und nachverfolgen lässt. Im Extremfall kommt dabei eine Ortsbestimmung mittels des GPS-Systems oder vergleichbarer Systeme in betracht. Auch können innerhalb des rollbaren Transportkörpers Permanentmagnete angeordnet sein, die von aussen abgefragt werden oder beim Passieren bestimmter Orte Schaltvorgänge auslösen können.

Eine andere Ausgestaltung des Transportbehälters ist dadurch gekennzeichnet, dass das Transportgut von aussen einsehbar ist. Die Aussenhülle weist beispielsweise durchsichtige Teile, Öffnungen, eine Gitterstruktur, etc. auf. Da das Transportgut beim Abrollen des rollbaren Transportbehälters gegenüber der Unterlage stets gleich ausgerichtet ist, lässt sich das Transportgut stets von derselben Ansicht einsehen, beispielsweise ist stets ein Code oder andere Identifikationsmittel des Transportguts einsehbar.

Die Aussenhülle der in den vorliegenden Figuren dargestellten rollbaren Transportkörper ist diejenige Fläche, mit der der rollbare Transportkörper auf einer Unterlage abrollt. Sie sollte daher eine ausreichende Härte aufweisen, um den beim Rollvorgang auftretenden, reibenden und/oder stossenden Belastungen über einen ausreichend langen Benutzungszeitraum gewachsen zu sein.

Die Oberfläche der Aussenhülle kann glatt ausgebildet sein, kann aber auch Noppen oder lokale Dellen wie bei einem Golfball aufweisen, um bestimmte Lauf- oder Abrolleigenschaften hervorzurufen. Des Weiteren können, wenn eine Rollbarkeit in beliebigen Richtungen nicht erwünscht ist, auf der Aussenseite ein oder mehrere umlaufende Führungswülste vorgesehen werden, die der Rollbewegung eine bestimmte Vorzugsrichtung geben.

Als Materialien kommen insbesondere geeignete Kunststoffe in Frage, die unterschiedliche Grade von Durchsichtigkeit aufweisen aber auch vollkommen undurchsichtig sein können. In Einzelfällen ist es auch denkbar, als Material für die Aussenhülle ein widerstandsfähiges Glas einzusetzen, wie es z.B. ähnlich bei Mehrweg-Getränkeflaschen verwendet wird. In besonderen Fällen kann die Aussenhülle aber auch aus einem geeigneten Metall oder einer Metalllegierung hergestellt sein, wenn z.B. thermische oder elektromagnetische, insbesondere z.B. Abschirm-Eigenschaften, von Bedeutung sind.

Sofern das Hüllenmaterial von seiner Art her undurchsichtig ist, kann an bestimmten Stellen der Hülle eine lokale Einsehbarkeit des Inneren vorgesehen werden, indem dort Sichtfenster angebracht werden.

Bei einem erfindungsgemässen Verfahren zum Transportieren eines Transportguts wird bei einem Ausgangsort das Transportgut in einem erfindungsgemässen Transportbehälter angeordnet. Der Transportbehälter bewegt sich vom Ausgangsort zu einem Zielort. Der Transportbehälter wird beispielsweise gerollt, von einem Förderband bewegt, etc. Beim Zielort wird das Transportgut aus dem Transportbehälter entnommen. Durch das Rollen auf einer geneigten Unterlage erfolgt der Transport ohne Zuführung externer Energie, indem die potentielle Energie der Transporthalterung genutzt wird. Das Transportgut ist gegenüber der Unterlage stets gleich ausgerichtet und wird damit schonend transportiert.

Eine andere Ausgestaltung des Verfahrens ist dadurch gekennzeichnet, dass das Transportgut mit einer Ladevorrichtung im Transportbehälter angeordnet wird und/oder dass das Transportgut mit einer Entladevorrichtung aus dem Transportbehälter entnommen wird. Dadurch ist eine vollautomatisierte Bewirtschaftung eines Warenlagers ermöglicht.

Eine andere Ausgestaltung des Verfahrens ist dadurch gekennzeichnet, dass der Transportbehälter zumindest auf einer Teilstrecke zwischen dem Ausgangsort und dem Zielort rollt. Die Transporthalterung wird auf einer Unterlage gerollt, wie insbesondere auf einer selektierbaren Rollbahn. Dadurch ist auf der zumindest einen Teilstrecke der Transport eines Transportobjekts ohne Zuführung von externer Energie ermöglicht. Der rollbare Transportkörper kann auf geraden und/oder kurvenförmigen Unterlagen abrollen.

Eine andere Ausgestaltung des Verfahrens ist dadurch gekennzeichnet, dass der Transportbehälter zwischen dem Ausgangsort und dem Zielort in einer Lagervorrichtung zwischengelagert wird. In einem Warenlager können Lagereinrichtungen in einer beliebigen Anzahl und mit einem beliebigen Speichervolumen nach Bedarf angeordnet werden.

Eine andere Ausgestaltung des Verfahrens ist dadurch gekennzeichnet, dass der entleerte Transportbehälter vom Zielort zum Ausgangsort zurück bewegt wird. Der Transportbehälter wird insbesondere vom Zielort zum Ausgangsort auf einer oder mehreren Rollbahnen zurückgerollt und/oder mit einer oder mehreren Transporteinrichtungen zurückgeführt. Die Transporthalterung ist wieder verwendbar und kann gleich nach dem Entleeren einer Wiederbefüllung zugeführt werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine Variante eines rollbaren Transportbehälters, mit in einem mittleren Bereich des rollbaren Transportbehälters angeordneten Lagermittel, die kalottenförmige Abstützeinrichtungen und stangenförmige Profile aufweisen;
- Fig. 2: eine Variante eines rollbaren Transportbehälters, mit in einem mittleren Bereich des rollbaren Transportbehälters angeordneten Lagermittel, die sich nur beschränkt gegenüber der Aussenhülle verschieben können;
- Fig. 3: eine Variante eines rollbaren Transportbehälters, mit in einem mittleren Bereich des rollbaren Transportbehälters angeordneten Lagermittel, die Wälzlager aufweisen;
- Fig. 4: eine Schnittansicht der in Figur 3 gezeigten Variante eines rollbaren Transportbehälters;
- Fig. 5: eine nicht erfindungsgemäße Variante eines rollbaren Transportbehälters, mit in einem unteren Bereich des rollbaren Transportbehälters angeordneten Lagermittel, die kugelförmige Rollkörper aufweisen;
- Fig. 5a: eine Detailansicht eines in Figur 5 gezeigten kugelförmigen Rollkörpers;
- Fig. 6: eine Schnittansicht der in Figur 5 gezeigten Variante eines rollbaren Transportbehälters;
- Fig. 7: eine Variante eines rollbaren Transportbehälters, mit in einem unteren Bereich des rollbaren Transportbehälters angeordneten Lagermittel, die eine ringförmige Stützeinrichtung aufweisen;
- Fig. 8: eine nicht erfindungsgemäße Variante eines rollbaren Transportbehälters, mit in einem unteren Bereich des rollbaren Transportbehälters angeordneten Lagermittel, die an der Innenhalterung ausgebildet sind;
- Fig. 9: in einem Querschnitt mehrere geneigte Unterlagen, eine geneigte Transporteinrichtung sowie eine Lagervorrichtung mit rollbaren Transportbehälter;
- Fig. 10: in einem Querschnitt von oben gesehen eine Variante eines rollbaren Transportbehälters, mit einem Lagermittel, das kardanartig ausgebildet ist und in einem mittleren Bereich des rollbaren Transportbehälters zwischen der Aussenhülle und der Innenhalterung zusammenwirkt; und
- Fig. 11: in einem Querschnitt von oben gesehen eine Variante eines rollbaren Transportbehälters, mit einem Lagermittel, das in pfannenartigen Halterungen angeordnete Kugelkörper aufweist und in einem mittleren Bereich des rollbaren Transportbehälters zwischen der Aussenhülle und der Innenhalterung zusammenwirkt.

### WEGE ZUR AUSFÜHRUNG DER ERFINDUNG

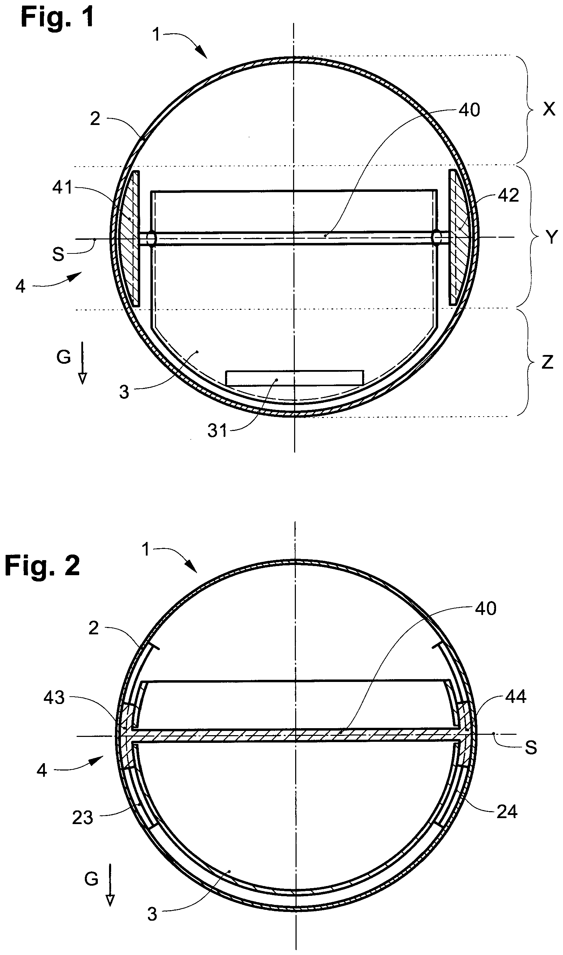

Figur 1 zeigt schematisch einen Querschnitt einer Variante eines rollbaren Transportbehälters 1, welcher eine Aussenhülle 2 in der Form eines rollbaren Körpers und eine Innenhalterung 3 zur Halterung eines Transportguts umfasst. Die Aussenhülle 2 ist kugelförmig ausgebildet und ist auf einer Unterlage abrollbar. Die Innenseite der Aussenhülle 2 ist kugelförmig ausgebildet. Es sind Lagermittel 4 ausgebildet, um die Innenhalterung 3 drehbar in der Aussenhülle 2 zu lagern. Die Lagermittel 4 sind nur in einem mittleren Bereich des rollbaren Transportbehälters ausgebildet. Der mittlere Bereich umfasst einen Bereich auf halber Höhe des rollbaren Transportbehälters 1. Ausserhalb dieses mittleren Bereichs sind keine Lagermittel 4 zur drehbaren Lagerung der Innenhalterung 3 in der Aussenhülle 2 ausgebildet.

Die Aussenhülle der in den vorliegenden Figuren dargestellten rollbaren Transportkörper ist diejenige Fläche, mit der der rollbare Transportkörper auf einer Unterlage abrollt. Sie sollte daher eine ausreichende Härte aufweisen, um den beim Rollvorgang auftretenden, reibenden und/oder stossenden Belastungen über einen ausreichend langen Benutzungszeitraum gewachsen zu sein.

Die Oberfläche der Aussenhülle kann glatt ausgebildet sein, kann aber auch Noppen oder lokale Dellen wie bei einem Golfball aufweisen, um bestimmte Lauf- oder Abrolleigenschaften hervorzurufen. Des Weiteren können, wenn eine Rollbarkeit in beliebigen Richtungen nicht erwünscht ist, auf der Aussenseite ein oder mehrere umlaufende Führungswülste vorgesehen werden, die der Rollbewegung eine bestimmte Vorzugsrichtung geben.

Als Materialien kommen insbesondere geeignete Kunststoffe in Frage, die unterschiedliche Grade von Durchsichtigkeit aufweisen aber auch vollkommen undurchsichtig sein können. In Einzelfällen ist es auch denkbar, als Material für die Aussenhülle ein widerstandsfähiges Glas einzusetzen, wie es z.B. ähnlich bei Mehrweg-Getränkeflaschen verwendet wird. In besonderen Fällen kann die Aussenhülle aber auch aus einem geeigneten Metall oder einer Metalllegierung hergestellt sein, wenn z.B. thermische oder elektromagnetische, insbesondere z.B. Abschirm-Eigenschaften, von Bedeutung sind.

Sofern das Hüllenmaterial von seiner Art her undurchsichtig ist, kann an bestimmten Stellen der Hülle eine lokale Einsehbarkeit des Inneren vorgesehen werden, indem dort Sichtfenster angebracht werden.

Die in Figur 1 gezeigten Lagermittel 4 zur Lagerung der Innenhalterung 3 umfassen ein stangenförmiges Profil 40 und damit verbundene Abstützeinrichtungen 41, 42, die an der Innenseite der Aussenhülle 2 abgestützt sind. Die Abstützeinrichtungen 41, 42 sind kalottenförmig ausgebildet. Die Krümmung der kalottenförmigen Abstützeinrichtungen 41, 42 ist entsprechend der Krümmung der kugelförmigen Innenseite der Aussenhülle 2 ausgebildet. Die Innenhalterung 3 ist mit dem stangenförmigen Profil 40 verbunden. Das stangenförmige Profil 40 kann mehrere Teile umfassen und die Innenhalterung 3 durchdringen, diese umschliessen, etc.

In einer Variante ist die Innenhalterung 3 fest mit dem stangenförmiges Profil 40 verbunden und die Abstützeinrichtungen 41, 42 sind gegenüber der Aussenhülle 2 drehbar. In der in Figur 1 gezeigten Position des abrollbaren Transportbehälters 1 ist damit die Innenhalterung 3 um eine Drehachse S herum drehbar in der Aussenhülle 2 gelagert. Das Drehen der Abstützeinrichtungen 41, 42 gegenüber der Aussenhülle 2 ist durch geeignete Materialpaarungen der betreffenden Teile, Schmiermittel zwischen den betreffenden Teilen, Flüssigkeiten oder Fluide zwischen den betreffenden Teilen etc. ermöglicht oder begünstigt.

Wenn zwischen der Aussenhülle 2 und der Innenhalterung 3 eine Flüssigkeit oder ein Fluid vorhanden ist, dann kann dadurch der Schwerpunkt des Transportbehälters tiefer gehalten werden, insbesondere für den Fall von Flüssigkeiten oder Fluiden mit einer hohen Dichte.

In einer Variante ist die Innenhalterung 3 drehbar am stangenförmigen Profil 40 angeordnet. Alternativ oder zusätzlich ist das stangenförmige Profil 40 drehbar mit den Abstützeinrichtungen 41, 42 verbunden. Die drehbare Anordnung wird beispielsweise mit Wälzlager erstellt. In der in Figur 1 gezeigten Position des abrollbaren Transportbehälters 1 ist dadurch die Innenhalterung 3 um eine Drehachse S herum drehbar in der Aussenhülle 2 gelagert, unabhängig davon, ob die Abstützeinrichtungen 41, 42 gegenüber der Aussenhülle 2 drehbar sind oder nicht.

In einer Variante ist die Innenhalterung 3 drehbar am stangenförmigen Profil 40 angeordnet und die Abstützeinrichtungen 41, 42 sind gegenüber der Aussenhülle 2 drehbar ausgebildet. Die Drehbarkeit ist durch erwähnte Varianten ermöglicht. In der in Figur 1 gezeigten Position des abrollbaren Transportbehälters 1 ist dadurch die Innenhalterung 3 um eine Drehachse S herum drehbar in der Aussenhülle 2 gelagert.

Die im Zusammenhang mit Figur 1 dargestellte Variante eines rollbaren Transportbehälters 1 sowie die nachfolgend beschriebenen Varianten sind für das Anordnen und zur Entnahme eines Transportguts eingerichtet. So weisen beispielsweise die Aussenhülle 2 und die Innenhalterung 3 Mittel auf, um ein Anordnen und eine Entnahme eines Transportguts zu ermöglichen. Solche Mittel können z.B. Klappen, auftrennbare und zusammenfügbare Gehäuseteile, etc. betreffen.

Die im Zusammenhang mit Figur 1 dargestellte Innenhalterung 3 sowie die nachfolgend beschriebenen Varianten von Innenhalterungen 3 weisen vorzugsweise eine derartige Gewichtsverteilung auf, dass die Innenhalterung 3 beim Abrollen des rollbaren Transportbehälters 1 auf einer Unterlage gegenüber dieser Unterlage stets im Wesentlichen gleich ausgerichtet bleibt, beispielsweise aufgrund von Trägheitsmomenten. Die Gewichtsverteilung ist insbesondere derart, dass sich der Schwerpunkt der Innenhalterung 3 unterhalb einer Drehachse S befindet, um welche die Innenhalterung 3 drehbar in der Aussenhülle 2 gelagert ist. In einer Variante wird die Gewichtsverteilung durch eines oder mehrere Zusatzgewichte 31 beeinflusst, welche beispielsweise an der Innenhalterung 3 in einem Bereich angebracht sind, der sich in einem unteren Bereich des abrollbaren Transportbehälters befindet. Zusätzlich oder alternativ kann die Gewichtsverteilung durch einen asymmetrischen Aufbau der Innenhalterung 3 in dieser Weise beeinflusst werden. Die Gewichtsverteilung wird weiter durch das in der Innenhalterung angeordnete Transportgut beeinflusst.

Figur 2 zeigt schematisch einen Querschnitt einer Variante eines rollbaren Transportbehälters 1, welcher eine Aussenhülle 2 in der Form eines rollbaren Körpers und eine Innenhalterung 3 zur Halterung eines Transportguts umfasst. Die Aussenhülle 2 ist kugelförmig ausgebildet und ist auf einer Unterlage abrollbar. Die Innenseite der Aussenhülle 2 ist kugelförmig ausgebildet. Es sind Lagermittel 4 ausgebildet, um die Innenhalterung 3 drehbar in der Aussenhülle 2 zu lagern. Die Lagermittel 4 sind nur in einem mittleren Bereich des rollbaren Transportbehälters ausgebildet. Der mittlere Bereich umfasst einen Bereich auf halber Höhe des rollbaren Transportbehälters 1. Ausserhalb dieses mittleren Bereichs sind keine Lagermittel 4 zur drehbaren Lagerung der Innenhalterung 3 in der Aussenhülle ausgebildet.

Die in Figur 2 gezeigten Lagermittel 4 umfassen ein stangenförmiges Profil 40, an welchem die Innenhalterung 3 drehbar gelagert ist. Die Lagermittel 4 umfassen weiter Haltervorrichtungen 43, 44, welche am stangenförmigen Profil 40 ausgebildet sind. Die Lagermittel 4 umfassen weiter an der Innenseite der Aussenhülle 2 angebrachte Befestigungsvorrichtungen 23, 24, welche mit den Haltervorrichtungen 43, 44 zusammenwirken. In der in Figur 2 gezeigten Position des abrollbaren Transportbehälters 1 ist dadurch die Innenhalterung 3 um eine Drehachse S herum drehbar in der Aussenhülle 2 gelagert.

In einer Variante wirken die Haltevorrichtungen 43, 44 und die Befestigungsvorrichtung 23, 24 derart zusammen, dass die Lagermittel 4 und damit die Drehachse S in einen begrenzten Bereich gegenüber der Aussenhülle 2 verschiebbar ist. Der betreffende Bereich ist durch eine auf der Innenfläche der Aussenhülle 2 definierte Linie oder Fläche begrenzt.

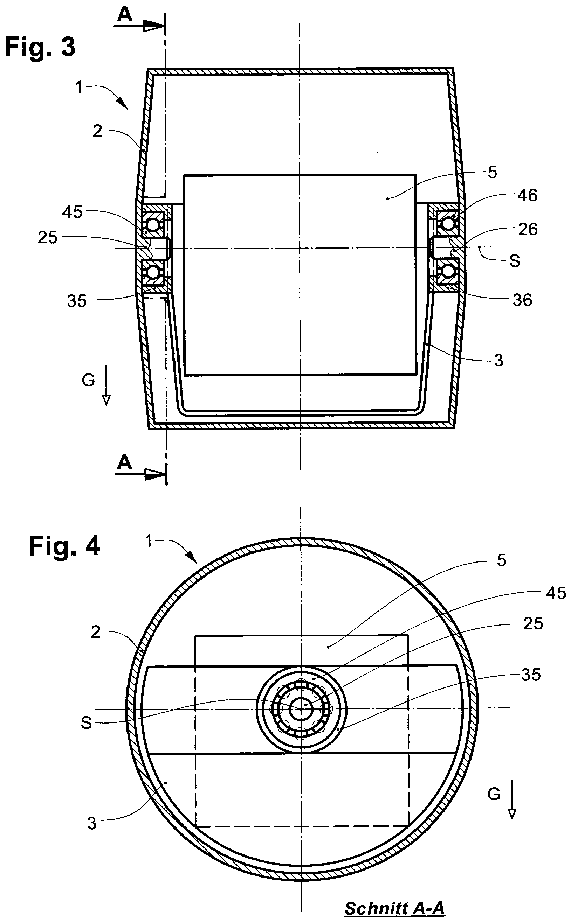

Figur 3 zeigt schematisch einen Querschnitt einer Variante eines rollbaren Transportbehälters 1, welcher eine Aussenhülle 2 in der Form eines rollbaren Körpers und eine Innenhalterung 3 zur Halterung eines Transportguts umfasst. Die Aussenhülle 2 ist zylinderförmig ausgebildet. Die zylinderförmige Aussenhülle 2 weist eine Mantelfläche und zwei Grundflächen auf. Die Mantelfläche ist zum Abrollen des rollbaren Transportkörpers 1 auf einer Unterlage ausgebildet. Der Innenraum der Aussenhülle 2 ist zylinderförmig ausgebildet. Es sind Lagermittel 4 ausgebildet, um die Innenhalterung 3 um eine Drehachse S herum drehbar in der Aussenhülle 2 zu lagern. Die Lagermittel 4 sind nur in einem mittleren Bereich des rollbaren Transportbehälters ausgebildet. Der mittlere Bereich umfasst einen Bereich auf halber Höhe des rollbaren Transportbehälters 1. Ausserhalb dieses mittleren Bereichs sind keine Lagermittel 4 zur drehbaren Lagerung der Innenhalterung 3 in der Aussenhülle ausgebildet.

Die in Figur 3 gezeigten Lagermittel 4 umfassen je einen an der Innenseite der zwei Grundflächen der zylinderförmig ausgebildeten Aussenhülle 2 angeordneten zapfenförmigen Vorsprung 25, 26. Die zapfenförmigen Vorsprünge können aus dem Material der Grundflächen geformt sind oder an die Grundflächen ergänzend angebracht sein. Die Lagermittel 4 umfassen Wälzlager 45, 46, welche an den zapfenförmigen Vorsprüngen 25, 26 angebracht sind. Die Lagermittel 4 umfassen an der Innenhalterung 3 ausgebildete Aufnahmen 35, 36, in welche die Wälzlager 45, 46 eingesetzt sind. In einer Variante sind die Wälzlager 45, 46 als Kugellager ausgebildet. In der in Figur 2 gezeigten Position des abrollbaren Transportbehälters 1 ist dadurch die Innenhalterung 3 um eine Drehachse S herum drehbar in der Aussenhülle 2 gelagert.

Wie aus Figur 3 ersichtlich, ist in der Innenhalterung 3 ein Transportgut 5 angeordnet.

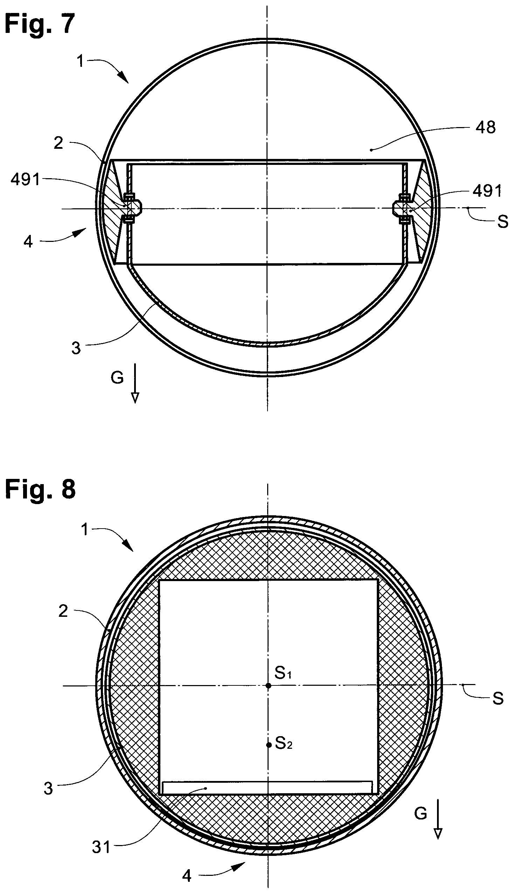

Die in den Figuren gezeigten Varianten eines rollbaren Transportbehälters weisen Lagermittel 4 auf, welche an verschiedenen Stellen Wälzlager aufweisen können. Mit Bezug auf Figur 1 oder Figur 2 sind in einer Variante eines oder mehrere Wälzlager zur drehbaren Anordnung der Innenhalterung 3 am stabförmigen Profil 40 vorgesehen. In einer weiteren Variante sind eines oder mehrere Wälzlager zwischen dem stabförmigen Profil 40 und den Abstützeinrichtungen 41, 42 vorgesehen. Mit Bezug auf Figur 2 sind in einer Variante eines oder mehrere Wälzlager zwischen dem stabförmigen Profil 40 und den Haltervorrichtungen 43, 44 vorgesehen. Mit Bezug auf Figur 7 sind in einer Variante zwischen der Innenhalterung 3 und der ringförmigen Stützeinrichtung 48 eines oder mehrere Wälzlager vorgesehen. Wie erwähnt sind Wälzlager in einer Variante als Kugellager ausgeführt.

Es können mehr als zwei Abstützeinrichtungen 41, 42 vorgesehen sein, die beispielsweise in regelmässigen Abständen an der Aussenhülle 2 abgestützt sind. Im Falle von mehr als zwei Abstützvorrichtungen können diese an der Aussenhülle 2 verschiebbar oder feststehend abgestützt sein, wobei die Innenhalterung 3 an den mehr als zwei Abstützvorrichtungen drehbar gelagert ist.

Die Ausbildung der Abstützeinrichtungen 41, 42 kann kalottenförmig sein oder beispielsweise die Form eines Segments eines bombierten Rings aufweisen.

Zur Erhöhung der Festigkeit können Abstützeinrichtungen 41, 42 miteinander verbunden sein, beispielsweise mit drahtförmigen Verbindungsmittel.

Figur 4 zeigt schematisch den in Figur 3 eingezeichneten Schnitt A-A des rollbaren Transportbehälters 1. Das in die Innenhalterung 3 eingesetzte Transportgut 5 ist teilweise gestrichelt eingezeichnet.

Wie in Figur 3 und Figur 4 schematisch angedeutet, sind die Innenhalterung 3 und das Transportgut 5 derart ausgeführt, dass der Schwerpunkt der Innenhalterung 3 näher bei der Unterlage (auf welcher der rollbare Transportbehälter 1 abrollt) liegt als die Drehachse S. Beim Abrollen des rollbaren Transportbehälters 1 bleibt deshalb die Innenhalterung 3 stets im Wesentlichen gegenüber der Unterlage gleich ausgerichtet und das Transportgut 5 wird beim Transport nur den Beschleunigungskräften ausgesetzt, welche beim Anrollen des rollbaren Transportbehälters 1 und beim Abbremsen des rollbaren Transportbehälters 1 entstehen. Diese Eigenschaft gilt für die in den Figuren dargestellten Varianten eines rollbaren Transportkörpers mit einer derartigen Position des Schwerpunkts der Innenhalterung 3 und der Drehachse S.

Die in den Figuren gezeigten Ausführungsformen haben gemeinsam, dass sich beim Rollen des Transportbehälters 1 das Transportgut 5 nicht mit dem Transportbehälter 1 mitdreht, sondern dass das Transportgut 5 gegenüber der Richtung der Schwerkraft G im Wesentlichen stets gleich ausgerichtet bleibt. Die Richtung der Schwerkraft G ist in den Figuren jeweils mit einem Pfeil markiert.

Die Drehachse S ist in den dargestellten Figuren für eine bestimmte Stellung des rollbaren Transportbehälters 1 eingezeichnet. Je nach Ausführung der Lagermittel 4 und der Unterlage, auf welcher der rollbare Transportkörper 1 abrollt, kann sich die Neigung der Drehachse S gegenüber der Unterlage dynamisch verändern oder gleich bleiben.

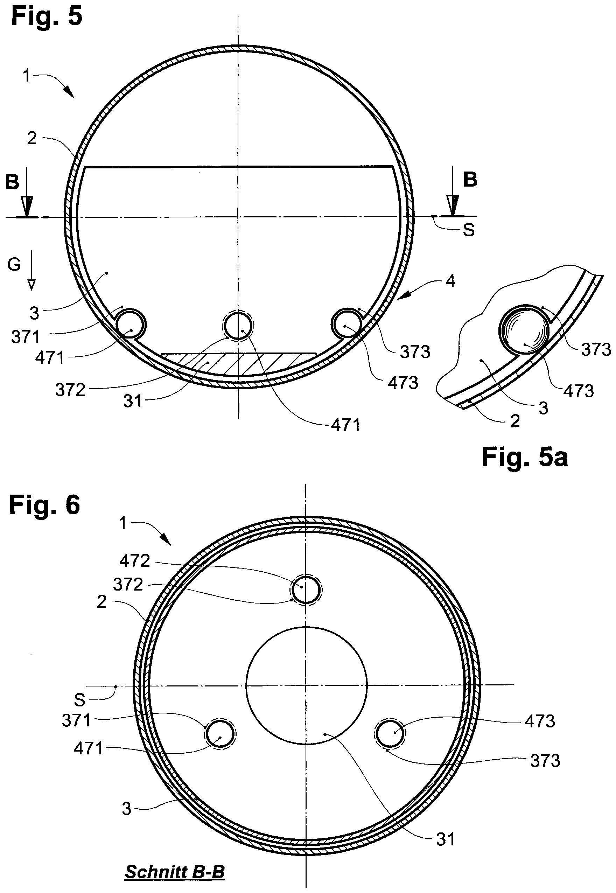

Figur 5 zeigt schematisch einen Querschnitt einer Variante eines rollbaren Transportbehälters 1, welcher eine Aussenhülle 2 in der Form eines rollbaren Körpers und eine Innenhalterung 3 zur Halterung eines Transportguts umfasst. Die Aussenhülle 2 ist kugelförmig ausgebildet und ist auf einer Unterlage abrollbar. Der Innenraum der Aussenhülle 2 ist kugelförmig ausgebildet. Es sind Lagermittel 4 ausgebildet, um die Innenhalterung 3 drehbar in der Aussenhülle 2 zu lagern. Die Lagermittel 4 sind nur in einem unteren Bereich des rollbaren Transportbehälters ausgebildet. Der untere Bereich umfasst einen Bereich unterhalb der halben Höhe des rollbaren Transportbehälters 1. Ausserhalb dieses unteren Bereichs sind keine Lagermittel 4 zur drehbaren Lagerung der Innenhalterung 3 in der Aussenhülle ausgebildet.

Die in Figur 5 gezeigten Lagermittel 4 werden durch eine erste, zweite und dritte Pfanne 371, 372, 373 gebildet, welche an der Innenhalterung 3 angeordnet sind und in welche eine erste, zweite und dritte kugelförmige Rollkörper 471, 472, 473 eingesetzt sind. In Figur 5a ist ein vergrösserter Ausschnitt einer dritten Pfanne 373 gezeigt, in welche ein dritter kugelförmiger Rollkörper 473 eingesetzt ist. In der in Figur 5 gezeigten Position des abrollbaren Transportbehälters 1 ist dadurch die Innenhalterung 3 um eine Drehachse S herum drehbar in der Aussenhülle 2 gelagert.

Figur 6 ist zeigt schematisch den in Figur 5 eingezeichneten Schnitt B-B des rollbaren Transportbehälters 1.

Figur 7 zeigt schematisch einen Querschnitt einer Variante eines rollbaren Transportbehälters 1, welcher eine Aussenhülle 2 in der Form eines rollbaren Körpers und eine Innenhalterung 3 zur Halterung eines Transportguts umfasst. Die Aussenhülle 2 ist kugelförmig ausgebildet und ist auf einer Unterlage abrollbar. Der Innenraum der Aussenhülle 2 ist kugelförmig ausgebildet. Es sind Lagermittel 4 ausgebildet, um die Innenhalterung 3 drehbar in der Aussenhülle 2 zu lagern. Die Lagermittel 4 sind nur in einem mittleren Bereich des rollbaren Transportbehälters ausgebildet. Der mittlere Bereich umfasst einen Bereich auf der halben Höhe des rollbaren Transportbehälters 1. Ausserhalb dieses mittleren Bereichs sind keine Lagermittel 4 zur drehbaren Lagerung der Innenhalterung 3 in der Aussenhülle ausgebildet.

Die in Figur 7 gezeigten Lagermittel 4 umfassen eine ringförmige Stützeinrichtung 48, deren Aussenseite zur Abstützung an der Innenfläche der Aussenhülle 2 ausgebildet ist. An der Innenseite der ringförmigen Stützeinrichtung 48 ist die Innenhalterung 3 drehbar an zapfenförmigen Vorsprüngen 491, 492 gelagert. Die Aussenseite der ringförmigen Stützeinrichtung 48 ist entsprechend der Form der Innenfläche der Aussenhülle 2 ausgeführt, beispielsweise bombiert. In der in Figur 7 gezeigten Position des abrollbaren Transportbehälters 1 ist dadurch die Innenhalterung 3 um eine Drehachse S herum drehbar in der Aussenhülle 2 gelagert.

Figur 8 zeigt schematisch einen Querschnitt einer Variante eines rollbaren Transportbehälters 1, welcher eine Aussenhülle 2 in der Form eines rollbaren Körpers und eine Innenhalterung 3 zur Halterung eines Transportguts umfasst. Die Aussenhülle 2 ist kugelförmig ausgebildet und ist auf einer Unterlage abrollbar. Der Innenraum der Aussenhülle 2 ist kugelförmig ausgebildet. Es sind Lagermittel 4 ausgebildet, um die Innenhalterung 3 drehbar in der Aussenhülle 2 zu lagern. Die Lagermittel 4 sind nur in einem unteren Bereich des rollbaren Transportbehälters ausgebildet. Der untere Bereich umfasst einen Bereich unterhalb der halben Höhe des rollbaren Transportbehälters 1. Ausserhalb dieses unteren Bereichs sind keine Lagermittel 4 zur drehbaren Lagerung der Innenhalterung 3 in der Aussenhülle ausgebildet.

Die in Figur 8 gezeigten Lagermittel 4 sind direkt an der Innenhalterung 3 ausgebildet und eingerichtet, um beim Abrollen der Aussenhülle 2 an dieser abzurutschen, auf dieser zu gleiten, etc. Dies kann sich beispielsweise infolge geeigneter Materialpaarungen zwischen der Innenhalterung 3 und der Aussenhülle 2 ergeben. Es kann alternativ oder zusätzlich ein Schmiermittel zwischen der Innenhalterung 3 und der Aussenhülle 2 vorgesehen sein.

Die Lagermittel 4 einer in Figur 1 gezeigten und einer in Figur 7 gezeigten Variante einer rollbaren Transporthalterung sind um das Zentrum der Aussenhülle 2 herum frei verschiebbar. Das Verschieben kann durch Gleiten, Rutschen, etc. bewirkt werden. Beim Abrollen der rollbaren Transporthalterung 1 führt dies je nach Unterlage und Schwerpunktverteilung der Innenhalterung 3 zu einer entsprechenden Ausrichtung der Innenhalterung 3 mit dem darin angeordneten Transportgut, beispielsweise so, dass die Drehachse S im Wesentlichen senkrecht zur Richtung der Gravitationskraft ausgerichtet bleibt, auch wenn der rollbare Transportbehälter 1 auf einer kurvenförmigen Rinne abrollt.

Die Lagermittel 4 einer in Figur 2 gezeigten und einer in Figur 3 gezeigten Variante eines rollbaren Transportbehälters 1 sind dagegen gar nicht oder nur beschränkt um das Zentrum der Aussenhülle 2 herum verschiebbar. Beim Abrollen der rollbaren Transporthalterung 1 führt dies je nach Unterlage und Schwerpunktverteilung der Innenhalterung 3 zu einer entsprechenden Ausrichtung der Innenhalterung 3 mit dem darin angeordneten Transportgut, beispielsweise so, dass beim Abrollen auf einer kurvenförmigen Rinne die Drehachse S entsprechend der Krümmung der Kurve zunehmend geneigt ist gegenüber der Richtung der Schwerkraft G, im Falle von Lagermittel die gegenüber der Aussenhülle feststehend sind, oder bis zu einer bestimmten Krümmung im Wesentlichen senkrecht zur Richtung der Schwerkraft G und dann zunehmend geneigt ist, im Falle von in einem Bereich gegenüber der Aussenhülle 2 verschiebbaren Lagermittel.

Die in den Figuren gezeigten Lagermittel 4 können auch kombiniert angeordnet sein. So können die in Figur 1 gezeigten Lagermittel 4 und die in Figur 5 sowie Figur 6 gezeigten Lagermittel kombiniert angeordnet sein. Andere Kombinationen von Lagermittel sind je nach Aufgabe möglich.

In Figur 1 sind ein unterer Bereich Z, ein mittlerer Bereich Y und ein oberer Bereich X des rollbaren Transportkörpers 1 eingezeichnet. Diese Bereiche sind bei einer bestimmten Ausrichtung des Transportkörpers 1 gegenüber der Richtung der Schwerkraft G definiert.

Der mittlere Bereich Y des rollbaren Transportkörpers 1 wird durch einen Bereich abgedeckt, der den Mittelpunkt einschliesst und sich eine bestimmte Breite nach oben und unten erstreckt. Die Breite ist beispielsweise als ein Viertel, ein Drittel, ein Fünftel, etc. eines Durchmessers des rollbaren Transportkörpers 1 definiert. Vom mittleren Bereich ausgeschlossen sind kalottenförmige Bereiche an der oberen und unteren Seite des rollbaren Transportkörpers 1. Diese kalottenförmigen Bereiche erstrecken sich beispielsweise über einen Viertel, einen Fünftel, etc. eines Durchmessers des rollbaren Transportkörpers.

Der untere Bereich Z des rollbaren Transportkörpers 1 wird durch einen Bereich abgedeckt, der einen unteren kalottenförmigen Bereich des rollbaren Transportkörpers 1 einschliesst. Dieser kalottenförmige Bereich erstreckt sich beispielsweise über die Hälfte, einen Drittel, einen Viertel, etc. eines Durchmessers des rollbaren Transportkörpers 1.

Der obere Bereich X des rollbaren Transportkörpers 1 wird durch einen Bereich abgedeckt, der einen oberen kalottenförmigen Bereich des rollbaren Transportkörpers 1 einschliesst. Dieser kalottenförmige Bereich erstreckt sich beispielsweise über die Hälfte, einen Drittel, einen Viertel, etc. eines Durchmessers des rollbaren Transportkörpers 1.

Der mittlere Bereich Y und der untere Bereich Z sowie der mittlere Bereich Y und der obere Bereich X können überlappen, aneinanderstossen oder sich nicht überschneiden.

Der Innenraum der in den Figuren dargestellten Varianten eines rollbaren Transportbehälters ist kugelförmig oder zylinderförmig ausgebildet. Dieser Innenraum kann auch eine beliebige andere Form aufweisen. Beispielsweise kann der Innenraum quaderförmig ausgeführt sein. Die Lagermittel sind jeweils an die Form dieses Innenraums angepasst. Statt einer kalottenförmigen Abstützeinrichtung kann diese beispielsweise eine quaderförmige, keilförmige, etc. Form aufweisen.

Mit Bezug auf Figur 5 können auch mehr Pfannen und entsprechend mehr kugelförmige Rollkörper vorgesehen sein.

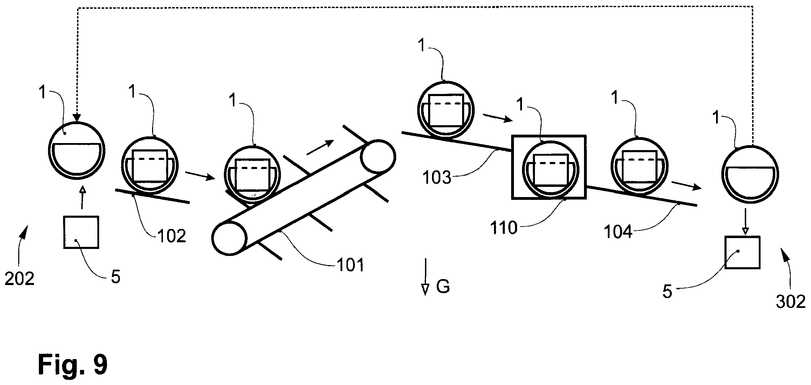

Figur 9 zeigt in einem Querschnitt mehrere geneigte Unterlagen 102, 103, 104, eine geneigte Transporteinrichtung 101 und eine Lagervorrichtung 110. In Figur 9 bezeichnet der Pfeil G, wie schon in den anderen Figuren, die Richtung der Schwerkraft. An einem Ausgangsort 202 wird ein Transportgut 5 in einem Transportbehälter 1 angeordnet. Der Transportbehälter 1 rollt aufgrund der Erdbeschleunigung zusammen mit dem Transportgut 5 auf einer Rollfläche auf der geneigten Unterlage mit dem Bezugszeichen 102 zur geneigten Transporteinrichtung 101. Der Transportbehälter 1 wird auf der Transporteinrichtung 101 angeordnet und von der Transporteinrichtung 101 unter Zuführung von Energie von einem tiefen Niveau auf ein hohes Niveau transportiert. Die Transporteinrichtung 101 weist Haltemittel auf, um den rollbaren Transportbehälter 1 zu halten und insbesondere daran zu hindern, auf das tiefe Niveau zurückzurollen. Der Transportbehälter 1 rollt auf der geneigten Unterlage 103 zur Lagervorrichtung 110 und wird dort eingelagert. Bei Bedarf wird der Transportbehälter 1 aus der Lagervorrichtung 110 zur geneigten Unterlage mit dem Bezugszeichen 104 geführt und darauf in Richtung Zielort 302 gerollt. Beim Zielort 302 wird das Transportgut 5 aus dem Transportbehälter 1 entnommen. Falls erwünscht, wird der Transportbehälter 1 vom Zielort 302 zum Ausgangsort 202 zurückgeführt.

Die in Figur 9 dargestellte Anordnung lässt sich beliebig erweitern und daraus ein vollständiges Lagersystem zur Lagerung verschiedenster Transportgüter bilden. Mit den rollbaren Transportbehälter ergibt sich eine Bewirtschaftung von Transportgütern, welche energieeffizient ist und einen schonenden Umgang mit den Transportgüter gewährleistet.

Die Transportgüter können irgendwelche Waren betreffen, wie beispielsweise Elektronikartikel, Pharmazeutika, Bücher, DVDs, etc.

Um die Transportgüter jederzeit identifizierbar zu machen, ohne dass rollbare Transportbehälter geöffnet werden muss, kann aussen oder innen ein "Tag", insbesondere ein RFID-Element oder -Tag angebracht sein, das mit entsprechenden drahtlos arbeitenden Mitteln ausgelesen werden kann. Alternativ oder zusätzlich zum RFID-Element kann ein Strichcode vorgesehen werden. Beide Elemente enthalten Informationen über das Transportgut, die eine eindeutige Identifikation des Transportguts möglich machen. Andere Arten von aufgebrachten Codes wie z.B. Matrixcode, Farbcode, Zahlencode, Thermocode oder Hologramme sind ebenfalls als Informations- und/oder Identifikationsmittel oder Sicherheitsmerkmal denkbar. Alle diese Mittel können optisch, magnetisch oder funktechnisch auslesbar sein, und zwar entweder als passive Mittel, die von aussen abgefragt werden, oder als aktive Mittel, die selbst eine Informationsübertragung durchführen.

Der rollbare Transportbehälter kann darüber hinaus mit einer eigenen Intelligenz ausgestattet sein, z.B. in Form von elektronischen Mitteln zur Daten- oder Signalverarbeitung, z.B. mit einem Mikroprozessor und entsprechenden Datenspeichern. Zugehörige Sende- und Empfangseinrichtungen können dabei über an der Aussenseite angebrachte Antennenelemente mit der Umgebung drahtlos Signale austauschen. Es ist aber auch denkbar, an bestimmten Stellen der Hülle von aussen zugängliche elektrische Kontakte anzuordnen, über die auf interne Schaltungen zugegriffen werden kann.

Im Zusammenhang mit internen elektronischen Einrichtungen in des rollbaren Transportkörpers können interne Energiespeicher und/oder Energiewandler vorgesehen werden, die mechanische Energie (Feder, Gasdruck), thermische Energie (Wärmespeicher) oder elektromagnetische Energie (Kondensator, Batterie, Akkumulator, Spule etc.) speichern oder Energie erzeugen (piezoelektrischer Wandler, induktiver Wandler etc.).

Weiterhin ist es denkbar, innerhalb des rollbaren Transportkörpers Ortungsmittel vorzusehen, mit deren Hilfe sich der Aufenthaltsort der Einheit jederzeit bestimmen und nachverfolgen lässt. Im Extremfall kommt dabei eine Ortsbestimmung mittels des GPS-Systems oder vergleichbarer Systeme in betracht. Auch können innerhalb des rollbaren Transportkörpers Permanentmagnete angeordnet sein, die von aussen abgefragt werden oder beim Passieren bestimmter Orte Schaltvorgänge auslösen können.

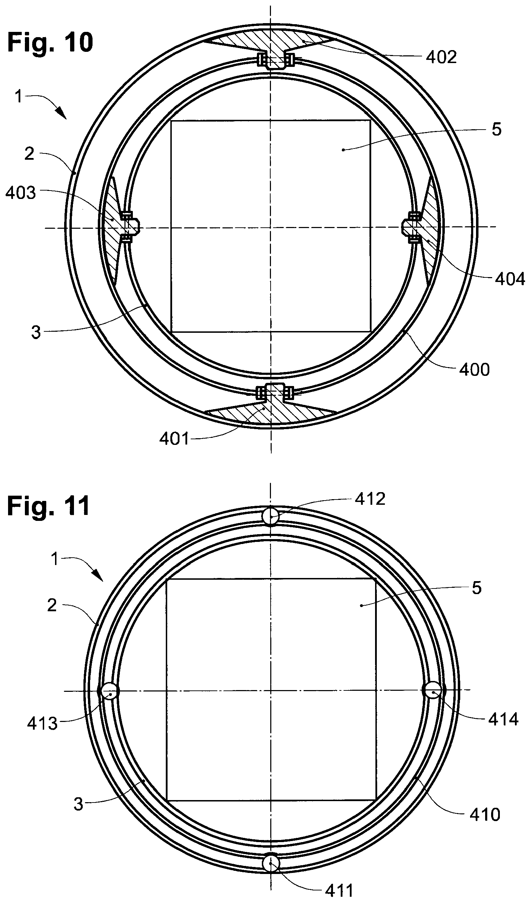

Die Figur 10 und die Figur 11 zeigen schematisch einen Querschnitt in einer Ansicht von Oben je eine Variante eines rollbaren Transportbehälters 1, welcher eine Aussenhülle 2 in der Form eines rollbaren Körpers und eine Innenhalterung 3 zur Halterung eines Transportguts 5 umfasst. Die Aussenhülle 2 ist kugelförmig ausgebildet und ist auf einer Unterlage abrollbar. Der Innenraum der Aussenhülle 2 ist kugelförmig ausgebildet. Es sind Lagermittel 4 ausgebildet, um die Innenhalterung 3 drehbar in der Aussenhülle 2 zu lagern. In den in Figur 10 und Figur 11 gezeigten Position des Transportbehälters 1 sind die Lagermittel 4 nur in einem mittleren Bereich des rollbaren Transportbehälters ausgebildet. Der mittlere Bereich umfasst einen Bereich auf der halben Höhe des rollbaren Transportbehälters 1. Ausserhalb dieses mittleren Bereichs sind keine Lagermittel 4 zur drehbaren Lagerung der Innenhalterung 3 in der Aussenhülle ausgebildet.

Die in Figur 10 gezeigten Lagermittel 4 umfassen ein mittleres Stützmittel 400, äussere Lagermittel 401, 402 und innere Lagermittel 403, 404. Die äussern Lagermittel 401, 402 sind an der Aussenhülle 2 angebracht und weisen zapfenförmige Vorsprünge auf, an welchen das mittlere Stützmittel 400 drehbar gelagert ist. Die inneren Lagermittel 403, 404 sind am mittleren Stützmittel 400 drehbar gelagert und weisen zapfenförmige Vorsprünge auf, an welchen die Innenhalterung 3 drehbar gelagert ist. Die äusseren Lagermittel 401, 402 bilden eine erste Drehachse. Die inneren Lagermittel 403, 404 bilden eine zweite Drehachse. Die erste Drehachse steht senkrecht zur zweiten Drehachse. Die Lagermittel 4 sind somit kardanartig ausgebildet. Das mittlere Stützmittel 400 ist beispielsweise ringförmig ausgebildet. Der Transportkörper 1 kann gegenüber der Richtung der Schwerkraft G so ausgerichtet werden, dass sich die Lagermittel 4 nur in einem mittleren Bereich des Transportkörpers 1 befinden. In einer Variante schliesst an das ringförmige mittlere Stützmittel 400 beidseits eine Kalotte an, wodurch ein kugelförmiger Körper gebildet wird, der sich zwischen der Innenhalterung 3 und der Aussenhülle 2 befindet.

Die in Figur 11 gezeigten Lagermittel 4 umfassen ein mittleres Stützmittel 410, äussere Lagermittel 411, 412 und innere Lagermittel 413, 414. Die äussern Lagermittel 411, 412 sind als Kugeln ausgebildet, welche zwischen der Aussenhülle 2 und dem mittleren Stützmittel 410 angeordnet sind. Dazu sind in der Aussenhülle 2 und/oder im mittleren Stützmittel 410 pfannenförmige Ausnehmungen vorgesehen, in welchen die Kugeln gehalten sind. Die inneren Lagermittel 413, 414 sind als Kugeln ausgebildet, welche zwischen der Innenhalterung 3 und dem mittleren Stützmittel 410 angeordnet sind. Dazu sind in der Aussenhülle 2 und/oder im mittleren Stützmittel 410 pfannenförmige Ausnehmungen vorgesehen, in welchen die Kugeln gehalten sind. Die äusseren Lagermittel 411, 412 bilden eine erste Drehachse. Die inneren Lagermittel 413, 414 bilden eine zweite Drehachse. Die erste Drehachse steht senkrecht zur zweiten Drehachse. Die Lagermittel 4 sind somit kardanartig ausgebildet. Das mittlere Stützmittel 400 ist beispielsweise ringförmig ausgebildet. Der Transportkörper 1 kann gegenüber der Richtung der Schwerkraft G so ausgerichtet werden, dass sich die Lagermittel 4 nur in einem mittleren Bereich des Transportkörpers 1 befinden. In einer Variante schliesst an das ringförmige mittlere Stützmittel 400 beidseits eine Kalotte an, wodurch ein kugelförmiger Körper gebildet wird, der sich zwischen der Innenhalterung 3 und der Aussenhülle 2 befindet.

## Patentansprüche

1. Rollbarer Transportbehälter (1), umfassend eine Aussenhülle (2), die auf einer Unterlage abrollbar ist, und eine Innenhalterung (3), die zur Halterung eines Transportguts (5) ausgebildet ist, wobei Lagermittel (4) ausgebildet sind, um die Innenhalterung (3) drehbar in der Aussenhülle (2) zu lagern, so dass das Transportgut beim Rollen des rollbaren Transportbehälters auf einer Unterlage, stets im Wesentlichen gegenüber der Unterlage gleich ausgerichtet bleibt, **dadurch gekennzeichnet,**
**dass** die Lagermittel (4) nur in einem mittleren Bereich des rollbaren Transportbehälters (1) ausgebildet sind, wobei der genannte mittlere Bereich des rollbaren Transportbehälters sich bei einer Ausrichtung des stehenden Transportkörpers gegenüber der Richtung der Schwerkraft (G) definiert, und wobei sich dieser mittlere Bereich über einen Drittel des Durchmessers des rollbaren Transportkörpers erstreckt.

2. Transportbehälter (1) nach Anspruch 1, **dadurch gekennzeichnet, dass** die Lagermittel (4) an der Aussenhülle (2) verschiebbar und/oder drehbar abgestützt sind.

3. Transportbehälter (1) nach Anspruch 1 oder 2, **dadurch gekennzeichnet, dass** die Lagermittel (4) ausgebildet sind, um die Innenhalterung (3) gegenüber dem Mittelpunkt des Transportbehälters verschiebbar und/oder drehbar zu lagern.

4. Transportbehälter (1) nach einem der Ansprüche 1 bis 3, **dadurch gekennzeichnet, dass** die Lagermittel (4) eines oder mehrere stabförmige Profile (40) umfassen, an welchen die Innenhalterung (3) angeordnet ist.

5. Transportbehälter (1) nach einem der Ansprüche 1 bis 4, **dadurch gekennzeichnet, dass** die Lagermittel (4) zur Abstützung an der Aussenhülle (2) mehrere Abstützeinrichtungen (41, 42) umfassen.

6. Transportbehälter (1) nach einem der Ansprüche 1 bis 5, **dadurch gekennzeichnet, dass** die Lagermittel (4) eine ringförmige Stützeinrichtung (48) umfasst, deren Aussenseite zur Abstützung an der Aussenhülle (2) ausgebildet ist und an deren Innenseite die Innenhalterung (2) drehbar gelagert ist, oder dass die Lagermittel (4) eines oder mehrere Wälzlager (45, 46) umfassen.

7. Transportbehälter (1) nach einem der Ansprüche 1 bis 6, **dadurch gekennzeichnet, dass** die Lagermittel (4) kugelförmige Körper (471, 472, 473) umfassen, welche in pfannenförmige Ausnehmungen (371, 372, 373) der Innenhalterung (3) eingesetzt sind, wobei die kugelförmigen Körper (471, 472, 473) an der Aussenhülle (2) abrollbar abgestützt sind.

8. Transportbehälter (1) nach einem der Ansprüche 1 bis 7, **dadurch gekennzeichnet, dass** die Aussenhülle (2) kugelförmig, zylinderförmig oder tonnenförmig ausgebildet ist.

9. Transportbehälter nach einem der Ansprüche 1 bis 8, **dadurch gekennzeichnet, dass** eines oder mehrere Zusatzgewichte vorgesehen sind.

10. Transportbehälter (1) nach einem der Ansprüche 1 bis 9, **dadurch gekennzeichnet, dass** die Aussenhülle (2) und/oder die Innenhalterung (3) aus mehreren Teilen zusammengesetzt sind.

11. Transportbehälter (1) nach Anspruch 10, **dadurch gekennzeichnet, dass** die Aussenhülle (2) und/oder die Innenhalterung (3) zwei oder mehr Teile umfasst, welche das Öffnen und Schliessen der Aussenhülle (2) und/oder der Innenhalterung (3) ermöglichen.

12. Transportbehälter (1) nach einem der Ansprüche 1 bis 11, **dadurch gekennzeichnet, dass** ein von aussen abfragbares Identifikationsmittel angeordnet ist, welches vorzugsweise ein optisch ablesbarer Code und/oder ein funkbasiert abfragbarer RFID-Tag ist.

13. Verfahren zum Transportieren eines Transportguts (5), wobei bei einem Ausgangsort (202) das Transportgut (5) in einem Transportbehälter (1) gemäss einem der Ansprüche 1 bis 12 angeordnet wird, wobei sich der Transportbehälter (1) vom Ausgangsort (202) zu einem Zielort (302) bewegt und wobei beim Zielort (302) das Transportgut (5) aus dem Transportbehälter (1) entnommen wird.

14. Verfahren nach Anspruch 13, **dadurch gekennzeichnet, dass** der Transportbehälter (1) zumindest auf einer Teilstrecke zwischen dem Ausgangsort (202) und dem Zielort (302) rollt.

15. Verfahren nach Anspruch 13 oder 14, **dadurch gekennzeichnet, dass** der Transportbehälter (1) zwischen dem Ausgangsort (202) und dem Zielort (302) in einer Lagervorrichtung (110) zwischengelagert wird.

## Claims

1. A rollable transport container (1), comprising an outer shell (2) that is rollable on a base surface, and an inner holder (3) that is designed for holding a good to be transported (5), wherein bearing means (4) are provided for rotatably supporting the inner holder (3) in the outer shell (2), so that when the rollable transport container rolls on a base surface, the good to be transported always remains essentially unvaryingly aligned with respect to the base surface,
**characterized in that**
the bearing means (4) are provided only in a middle area of the rollable transport container (1), wherein said middle area of the rollable transport container is defined for an orientation of the stationary transport body relative to the direction of the force of gravity (G), and wherein this middle area extends over one-third of the diameter of the rollable transport body.

2. The transport container (1) according to Claim 1, **characterized in that** the bearing means (4) are displaceably and/or rotatably supported on the outer shell (2).

3. The transport container (1) according to Claim 1 or 2, **characterized in that** the bearing means (4) are designed for displaceably and/or rotatably supporting the inner holder (3) with respect to the midpoint of the transport container.

4. The transport container (1) according to one of Claims 1 to 3, **characterized in that** the bearing means (4) comprise one or more rod-shaped profiles (40) on which the inner holder (3) is situated.

5. The transport container (1) according to one of Claims 1 to 4, **characterized in that** the bearing means (4) comprise multiple support devices (41, 42) for supporting on the outer shell (2).

6. The transport container (1) according to one of Claims 1 to 5, **characterized in that** the bearing means (4) comprise a ring-shaped support apparatus (48) whose outer side is designed for supporting on the outer shell (2), and on whose inner side the inner holder (2) is rotatably supported, or that the bearing means (4) comprise one or more roller bearings (45, 46).

7. The transport container (1) according to one of Claims 1 to 6, **characterized in that** the bearing means (4) comprise ball-shaped bodies (471, 472, 473) that are inserted into socket-shaped recesses (371, 372, 373) in the inner holder (3), wherein the ball-shaped bodies (471, 472, 473) are rollably supported on the outer shell (2).

8. The transport container (1) according to one of Claims 1 to 7, **characterized in that** the outer shell (2) is spherical, cylindrical, or barrel-shaped.

9. The transport container according to one of Claims 1 to 8, **characterized in that** one or more additional weights are provided.

10. The transport container (1) according to one of Claims 1 to 9, **characterized in that** the outer shell (2) and/or the inner holder (3) is/are made up of multiple parts.

11. The transport container (1) according to Claim 10, **characterized in that** the outer shell (2) and/or the inner holder (3) comprises two or more parts that allow the outer shell (2) and/or the inner holder (3) to open and close.

12. The transport container (1) according to one of Claims 1 to 11, **characterized in that** an externally queryable identification means is provided, which is preferably an optically readable code and/or a wirelessly queryable RFID tag.

13. A method for transporting a good to be transported (5), wherein at a point of origin (202) the good to be transported (5) is placed in a transport container (1) according to one of Claims 1 to 12, wherein the transport container (1) is moved from the point of origin (202) to a point of destination (302), and wherein the good to be transported (5) is removed from the transport container (1) at the point of destination (302).

14. The method according to Claim 13, **characterized in that** the transport container (1) rolls at least on a partial section between the point of origin (202) and the point of destination (302).

15. The method according to Claim 13 or 14, **characterized in that** between the point of origin (202) and the point of destination (302), the transport container (1) is temporarily stored in a storage device (110).

## Revendications

1. Conteneur de transport (1), apte au roulage, comprenant une coque extérieure (2) apte à rouler sur une base et un support intérieur (3) conçu pour supporter une marchandise à transporter (5), des moyens formant paliers (4) étant conçus pour monter le support intérieur (3) de manière rotative dans la coque extérieure (2) de sorte que, lorsque le conteneur de transport apte au roulage roule sur une base, la marchandise à transporter reste toujours orientée de la même manière par rapport à la base,
**caractérisé en ce que** les moyens formant paliers (4) sont conçus seulement dans une zone médiane du conteneur de transport (1) apte au roulage, ladite zone médiane du conteneur de transport apte au roulage étant définie lorsque le corps de transport est disposé verticalement par rapport à la direction de la pesanteur (G), et cette zone médiane s'étendant sur un tiers du diamètre du corps de transport apte au roulage.

2. Conteneur de transport (1) selon la revendication 1, **caractérisé en ce que** les moyens formant paliers (4) sont supportés de manière coulissante et/ou rotative au niveau de la coque extérieure (2).

3. Conteneur de transport (1) selon la revendication 1 ou 2, **caractérisé en ce que** les moyens formant paliers (4) sont conçus pour monter le support intérieur de manière coulissante et/ou rotative (3) par rapport au centre du conteneur de transport.

4. Conteneur de transport (1) selon l'une des revendications 1 à 3, **caractérisé en ce que** les moyens formant paliers (4) comportent un ou plusieurs profilés (40) en forme de barre au niveau desquels le support intérieur (3) est disposé.

5. Conteneur de transport (1) selon l'une des revendications 1 à 4, **caractérisé en ce que** les moyens formant paliers (4) comportent une pluralité de moyens de support (41, 42) destiné à venir en appui sur la coque extérieure (2).

6. Conteneur de transport (1) selon l'une des revendications 1 à 5, **caractérisé en ce que** les moyens formant paliers (4) comportent un moyen de support annulaire (48) dont le côté extérieur est conçu pour venir en appui sur la coque extérieure (2) et sur le côté intérieur duquel le support intérieur (2) est monté à rotation ou **en ce que** les moyens formant paliers (4) comportent un ou plusieurs paliers à roulement (45, 46).

7. Conteneur de transport (1) selon l'une des revendications 1 à 6, **caractérisé en ce que** les moyens formant paliers (4) comportent des corps sphérique (471, 472, 473) qui sont insérés dans des évidements (371, 372, 373) en forme de cuvette du support intérieur (3), les corps sphériques (471, 472, 473) étant supportés de manière à pouvoir rouler sur la coque extérieure (2).

8. Conteneur de transport (1) selon l'une des revendications 1 à 7, **caractérisé en ce que** la coque extérieure (2) est sphérique, cylindrique ou en forme de tonneau.

9. Conteneur de transport selon l'une des revendications 1 à 8, **caractérisé en ce qu'**il est prévu un ou plusieurs poids supplémentaires.

10. Conteneur de transport (1) selon l'une des revendications 1 à 9, **caractérisé en ce que** la coque extérieure (2) et/ou le support intérieur (3) sont constitués de plusieurs parties.

11. Conteneur de transport (1) selon la revendication 10, **caractérisé en ce que** la coque extérieure (2) et/ou le support intérieur (3) comporte deux parties ou plus qui permettent l'ouverture et la fermeture de la coque extérieure (2) et/ou du support intérieur (3).

12. Conteneur de transport (1) selon l'une des revendications 1 à 11, **caractérisé en ce qu'**il est prévu un moyen d'identification, interrogeable de l'extérieur, qui est de préférence un code à lecture optique et/ou une étiquette RFID interrogeable par des moyens radioélectriques.

13. Procédé de transport d'une marchandise à transporter (5), dans lequel la marchandise à transporter (5) est placée, à un point de départ (202), dans un conteneur de transport (1) selon l'une des revendications 1 à 12, dans lequel le conteneur de transport (1) est déplacé du point de départ (202) à un point d'arrivée (302) et dans lequel la marchandise à transporter (5) est retirée du conteneur de transport (1) au point d'arrivée (302).

14. Procédé selon la revendication 13, **caractérisé en ce que** le conteneur de transport (1) roule au moins sur une section de trajet entre le point de départ (202) et le point d'arrivée (302).

15. Procédé selon la revendication 13 ou 14, **caractérisé en ce que**, entre le point de départ (202) et le point d'arrivée (302), le conteneur de transport (1) est stocké temporairement dans un dispositif de stockage (110).
